# EUROPEAN PATENT SPECIFICATION

(11) **EP 2 446 624 B1**
(45) Date of publication and mention of the grant of the patent: **09.11.2016**
(21) Application number: 09779982.9
(22) Date of filing: 26.06.2009
(51) Int. Cl.: H04N 21/234, H04N 21/2343, H04N 21/235, H04N 21/262, H04N 21/44, H04N 21/6332, H04N 21/6543, H04N 21/414, H04N 21/654, H04L 29/06

(54) **MODIFYING COMMAND SEQUENCES**
DIE MODIFIKATION DER BEFEHLSFOLGEN
LA MODIFICATION DES SÉQUENCES DE COMMANDES

(43) Date of publication of application: 02.05.2012
(73) Proprietor: Nokia Solutions and Networks Oy, 02610 Espoo (FI)
(72) Inventor: BODI, Miklos Tamas, 3326 Ostoros (HU); FARKAS, Lorant, 1213 Budapest (HU); GESZTESI, Gabor, 1092 Budapest (HU)
(74) Representative: Borgström, Markus
(86) International application number: PCT/EP2009/058067
(87) International publication number: WO 2010/149227

(56) References cited:
- EP-A2- 0 647 047
- US-A- 4 954 948
- US-A1- 2004 230 675
- US-A1- 2009 003 434
- "Information technology Coding of audio-visual objects Part 20: Lightweight Application Scene Representation (LASeR) and Simple Aggregation Format (SAF)" 3GPP DRAFT; 1ST_ED_COR1_FDAM1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG4, no. Seattle, USA; 20070807, 7 August 2007 (2007-08-07), XP050289569 [retrieved on 2007-08-07]
- "MPEG-4 part 20 based specification for DIMS:Dynamic Interactive Multimedia Scene" 3GPP DRAFT; MPEG4PART20 BASED SPECIFICATION FOR DIMS SPECIFICATION-1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG4, no. Dallas; 20060516, 16 May 2006 (2006-05-16), XP050288478 [retrieved on 2006-05-16]

## Description

This invention relates to modifying command sequences. It is particularly, but not exclusively, related to optimising command sequences used in the presentation of media content on user terminal devices. It may relate to streaming of rich media content to mobile terminal devices.

Rich media content is typically graphically rich content, and often contains several types of compound media, such as text, graphics, animation, audio or video. Generally, rich media is dynamic in the sense that it can change as time passes and in some cases can respond to user interaction.

More rich media content is becoming available via the Internet and the demand for delivering it is increasing. As a consequence, it is becoming desirable to provide the means to enable resource constrained devices, such as mobile phones or embedded devices, to be capable of receiving and handling rich media content.

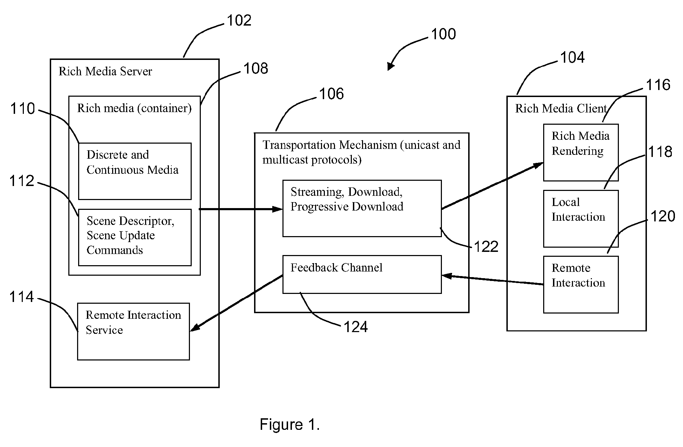

A rich media system in the form of a client-server system 100 is shown in Figure 1. It comprises a rich media server 102, a rich media client 104, and a transportation mechanism 106.

The rich media server 102 is configured to receive and store rich media in the form of a rich media container 108 comprising discrete media (such as still images) and continuous media (such as audio or video streams) 110 and scene descriptor commands 112. The scene descriptor commands 112 define the way in which the rich media content is to be built up, presented, and changed as time passes. Such changes are effected by scene update commands which are used to update the scene over time.

The rich media server 102 also comprises a remote interaction service block 114 which is configured to receive remote interaction from a user and use this to modify the scene as presented on a terminal device which incorporates and runs the rich media client 104.

The rich media client 104 has a rich media rendering block 116, a local interaction block 118, and a remote interaction block 120. The rich media rendering block 116 receives scene descriptor commands from the rich media server 102 via the transportation mechanism 106 and processes them for visual and audible presentation by the terminal device. The local interaction block 118 receives user commands which determine how the scene is presented by the terminal device. The remote interaction block 120 takes remote user commands and/or feedback and provides it to the remote interaction service block 114 via the transportation mechanism 106. These commands and/or feedback could be direct requests for new content or indirect requests in which a user action causes the system to seek to deliver new content.

The transportation mechanism 106 is capable of using a forward channel 122 to stream, download, and/or progressively download rich media to individual users in a one-to-one delivery mode or to many users in a one-to-many, or broadcast, delivery mode. Feedback provided by the remote interaction block 120 of the rich media client 104 is provided to the rich media server 102 by a feedback channel 124.

When the rich media is being streamed by the rich media server to rich media clients during a streaming session, it is either streamed so that different parts, for example audio, video, and a scene descriptor are streamed as separate tracks, for example in the case of the Real Time Streaming Protocol (RTSP) and the Real-time Transport Protocol (RTP) being used, or all of these elements are multiplexed together, for example in the case of the MPEG transport stream being used. The scene descriptor sent in a streaming unit is either a full (new) scene descriptor or an update command. An update command can be declarative (such as insert, delete, replace etc) or a script.

A typical rich media client runs on a user terminal device such as a personal computer, a net-book, a PDA, or a cellular wireless device such as a mobile telephone. In some cases, a rich media content stream can require a significant amount of processing which, if being handled by a resource constrained personal mobile device, can require long processing time periods to deal with the commands in the stream.

The rich media client 104 is responsible for rendering the content. Once the rich media content has been rendered and thus made available to a user, the rich media client 104 can interact with the content either locally or remotely. In the former case, user input changes the rendering of the rich media content on the terminal device. In the latter case, user input causes the rich media client 104 to request rich media content from the rich media server 102 so that content present in the rich media client 104 is changed and rendering and thus presentation on the terminal device can be changed.

Examples of such rich media systems include MPEG-BIFS, MPEG-LASeR and 3GPP-DIMS. BIFS is the default presentation engine for MPEG-4, while the latter two are scene description standards specifically designed for resource constrained applications.

The available transportation bandwidth between the rich media server 102 and the rich media client 104 is, in many cases, limited. Even in a high speed network, it is desirable to have evenly distributed traffic and to avoid traffic bursts. To this end, it has been proposed to use constant (maximum) bit-rate audio or video streams. However, scene description and scene update commands can in any case cause significant traffic bursts, especially since they may include embedded graphics, fonts, and scripts.

It is also a problem, especially on resource constrained devices, that scene update commands may need a long time period to execute because rendering is generally a resource-intensive operation. If there are several update commands close to each other in time, this can result in delayed or faulty rendering and, possibly, can cause internal processing problems in the user terminal device.

In order to deal with traffic bursts caused by scene descriptions and update commands, buffering may be used. For example, the MPEG-LASeR decoder model proposes buffering media streams both before and after decoding. In general, it is also a problem for the rich media client 104 to determine the necessary buffer size, which generally depends on the content itself. It is possible to negotiate the buffer size between the rich media server 102 and the rich media client 104 during the start of a session to transfer rich media content, but in the case of live streaming, the rich media server 102 itself cannot reliably determine the necessary buffer size in advance, and changing it during the streaming session is not possible without affecting rendering quality. In any case, buffering does not solve the problem of the long processing time periods required for a resource constrained user terminal device to deal with the commands.

US 4 954 948 A discloses a method for executing tasks by dividing the tasks into a plurality of sub-tasks, assigning priorities to the sub-tasks and scheduling the sub-tasks according to the assigned priorities.

EP 0 647 047 A2 discloses a method wherein graphics commands are partitioned into sub-commands to enable a fair scheduling of tasks across multiple applications over a network.

US 2009/003434 A1 discloses a method for modifying LASeR scene description commands to be able to support a wide range of receiving terminal devices.

According to a first aspect of the invention there is provided a method of modifying a command sequence comprising a plurality of commands, the commands having a schedule by which they are to be executed, comprising the steps of: transforming the commands into sub-command components of a first type which have to be executed according to the schedule and sub-command components of a second type which are not constrained to be executed according to the schedule; and
adjusting the order of the sub-command components so that estimated periods during which the sub-command components of the second type are executed do not overlap with the periods during which the sub-command components of the first type are executed.

Preferably the commands relate to scene description. They may be scene descriptor commands and update command for scene description. Preferably, the invention relates to streaming of such commands.

Preferably, the schedule defines the times at which original commands are to be executed. This may be the times at which starting to execute the commands is to commence. After modification, the schedule may be the times at which starting to execute the sub-command components of the first type is to commence.

Preferably, an original command is transformed into a sub-command component of the first type and a sub-command component of the second type so that it has a corresponding sub-command component of the first type and a corresponding sub-command component of the second type. However, it other embodiments of the invention, there may be more than two sub-command components.

Preferably, the sub-command components of the first type have a time-critical aspect in which execution according to the schedule relates to an event occurring which is perceptible to a user of a terminal device or has a material effect on an observer. Such a sub-command component may be referred to as an in-time sub-command component.

Preferably, the sub-command components of the second type have a non time-critical aspect in which execution according to the schedule relates to an event occurring which is not perceptible to the user of the receiving device. This may be background processing to enable the user perceptible event to occur. Such a sub-command may be referred to as a preparation sub-command component.

Preferably, a sub-command component of the second type of may be executed in advance of the schedule by which its corresponding sub-command component of the first type is to be executed. The sub-command component of the second type may be executed in advance of the schedule by which another sub-command component of the first type is to be executed which precedes the corresponding sub-command component of the first type so that there is at least one intervening sub-command component scheduled for execution between the sub-command component of the second type and its corresponding sub-command component of the first type.

Preferably, sub-command components of the second type are re-ordered around the sub-command components of the first type. In one embodiment, respective costs of executing the sub-command components of the first type are estimated and it is determined whether there are gaps available within an overall resource occupied by sub-command components of the first type within which the sub-command components of the second type may be executed. The term "available resource" may refer in some embodiments to the overall time period during which all of the sub-command components are to be executed or to the overall resource in bytes which corresponds to the amount of processing required to transmit or execute all of the sub-command components.

Preferably, the costs are estimated based on candidate rate parameters. Preferably, the method involves selecting an arbitrary rate parameter and attempting to schedule the sub-command components according to a scheduling adjustment sub-routine for the selected rate parameter. The rate parameters may be representative of a processing capability of the receiving device or of a bandwidth.

The invention may involve making a cost estimate of sub-command components. In various embodiments, this cost estimate can be treated as an estimation of the transferring size of the sub-command component, the processing capacity required for the execution of the sub-command component, or a combination of such parameters. If optimising for multiple parameters, a weighted maximum of them can be used to generate a cost estimate. The cost estimate can be used to generate the time period required to handle a sub-command component. For example, the transferring and/or processing time period of a sub-command component can be calculated by dividing the sub-command component cost estimate with the rate parameter, typically the number or amount of units being handled, for example expressed in terms of bytes per unit of time.

In another aspect, the invention may involve scheduling sub-command components with various values of the rate parameter so a workable rate parameter having as low a value as possible can be determined at which it is estimated that the sub-command components can be processed correctly.

In order to provide an efficient scheduling for resource constrained devices, in the invention the time periods which are to be taken in executing the sub-command components may be estimated. This may involve estimating the cost in terms of device and/or system resources of executing scene update commands. In this embodiment of the invention, such a cost estimate is an estimate, or possibly a direct measurement, of the transferring size of the update command. Once a cost estimate of a sub-command component is available, it can be used to estimate the time period required to handle the sub-command component, for example by dividing the sub-command component cost estimate with a processing speed at which it is assumed a receiving device which receives the sub-command components will be able to operate. Since this processing speed is not known, an arbitrary value for this will be generated and then a range of scheduling operations will be carried out to determine one at which the required processing speed is minimized. In another embodiment of the invention, scheduling may be based on the size of the sub-command components rather than the estimated time required to execute them.

Preferably, the schedule is a pre-defined schedule.

Preferably, the method involves generating an additional schedule by which the sub-command components of the second type are to be executed. The method may result in there being two schedules, a pre-defined schedule by which the sub-command components of the first type are to be executed and an additional schedule by which the sub-command components of the second type are to be executed.

Preferably, the method relates to optimising the scheduling of a plurality of commands.

Preferably, the method comprises an iterative part which uses a schedule adjustment sub-routine to determine the order in which the sub-command components are to be executed. The iterative part may perform optimising scheduling with different rate parameters until a viable rate parameter is determined.

Preferably, if the scheduling adjustment sub-routine results in a schedule of sub-command components which are likely to be executed in a timely manner at a selected rate parameter, the rate parameter is reduced and the sub-command components are then scheduled again according to the scheduling adjustment sub-routine. This may occur a number of times until the scheduling adjustment sub-routine indicates that timely execution is not achievable.

Preferably, if the scheduling adjustment sub-routine results in a schedule of sub-command components which are not likely to be executed in a timely manner at the selected rate parameter, the rate parameter is increased and the sub-command components are then scheduled again according to the scheduling adjustment sub-routine. This may occur a number of times until the scheduling adjustment sub-routine indicates that timely execution is achievable.

Use of the scheduling adjustment sub-routine may result in upper and lower bounds of the rate parameter.

The scheduling adjustment sub-routine may be applied to rate parameters between the upper and lower bound rate parameters with successful outcomes defining a new upper bound and unsuccessful outcomes defining a new lower bound. This step may be repeated iteratively until the difference of the two bounds is smaller than a predefined value. The last upper bound rate parameter may be taken to be the minimum rate parameter at which the sub-commands scheduled according to the scheduling adjustment sub-routine can be expected to run successfully.

Preferably the schedule adjustment sub-routine schedules sub-command components of the first type and then schedules sub-command components of the second type.

Preferably, the sub-command components of the first type are scheduled in order, from the one which is to be executed first to the one which is to be executed last.

Preferably, sub-command components of the second type are scheduled in reverse order, from the one which is to be executed last to the one which is to be executed first. They may be scheduled in gap order going from the latest to the earliest in terms of actual chronological (or processing) order.

Preferably, at the end of the iterative part having successfully processed all of the sub-command components, the result is that the following types of information are available:
(i) the sub-command components of the first type have assigned to them execution times according to the pre-defined schedule;
(ii) the sub-command components of the second type have assigned to them new execution times according to the additional schedule; and
(iii) the rate parameter at which the sub-command components have been successfully scheduled.

Preferably, sizes of sub-command components are estimated to provide sub-command cost estimates. The sub-command cost estimates may then be divided by the rate parameter to estimate the time periods required to handle each of the sub-command components.

One particular sub-command component of the first type may be checked to see if the time period required to handle it, extending forwards in time from its execution start time, overlaps with the execution start time of the immediately following sub-command component of the first type. If it does, the schedule adjustment sub-routine is deemed to have failed, and the rate parameter is deemed to have been "unsuccessful". At this point, the iterative part may choose a higher rate parameter which is used in scheduling sub-command components of the first type by the schedule adjustment sub-routine.

Preferably, if the time period of a sub-command component of the second type is too long to fit in any of the gaps between sub-command components of the first type, the schedule adjustment sub-routine is deemed to have failed, and the rate parameter is deemed to have been "unsuccessful". At this point, the iterative part may choose a higher rate parameter which is used in scheduling sub-command components of the second type by the schedule adjustment sub-routine.

Preferably, the rate parameter is a speed value. It may be a speed value representative of the processing speed of a receiving device or it may be a speed value representative of the transmission rate, for example in terms of a bandwidth or a bit-rate, between a transmitting device such as a server and a receiving device.

One sub-command component of the second type may be allocated to the same gap as one or more other sub-command components of the second type if there is room to accommodate them both or all. Preferably, the size of an nth sub-command component of the second type may be compared with the available size of a gap between sequential sub-command components of the first type to which an n+1th sub-command component of the second type has previously been allocated. The available size of the gap may be determined to be the size of the gap between sequential sub-command components of the first type minus the size of the n+1th sub-command component of the second type. In an embodiment in which gaps can accommodate a plurality of sub-command components of the second type, they are allocated to the gap in the order in which they are to be executed, that is an nth sub-command component of the second type precedes an n+1th sub-command component of the second type.

Preferably, if the schedule adjustment sub-routine is unable to allocate a sub-command component of the second type to an nth gap between sequential sub-command components of the first type, it next attempts to allocate the sub-command component of the second type to an n-1th gap between sequential sub-command components of the first type. In such a case, the method may be attempting to allocate the sub-command component of the second type into a gap which is as close as possible to its corresponding sub-command components of the first type.

Preferably, the method of modifying the command sequence is done to prepare it for transmission. Preferably, this is for transmission to a receiving device. This may be a terminal device, for example a mobile terminal device.

Preferably, the commands and sub-command components are executable by the receiving device to render multimedia at the receiving device. This may involve the presentation of images and/or video on a display of the receiving device, playing audio by the receiving device, or both.

Preferably, in an embodiment of the invention in which there is no dependency between sub-command components of the second type, the situation can arise in which, in a set of sub-command components having an optimised schedule, sub-command components of the second type end up having an optimised order which is different to their original order. However, they may still be allocated to gaps which precede their respect sub-commands of the first type.

The commands may be declarative updates. The transforming step may be transforming declarative update commands into non-declarative commands, for example scripts. In one embodiment, this may be to produce a sub-command capable of causing an animation effect.

In another embodiment of the invention, the transforming step may involve merging together sub-commands which have come from different original commands, for example producing a common preparation and/or in-time sub-command from more than one original command.

According to a second aspect of the invention there is provided a system for modifying and transmitting a command sequence comprising a plurality of commands, the commands having a schedule by which they are to be executed, the system comprising a server and a receiving device, the server being capable of:
transforming the commands into sub-command components of a first type which have to be executed according to the schedule and sub-command components of a second type which are not constrained to be executed according to the schedule;
adjusting the order of the sub-command components so that estimated periods during which the sub-command components of the second type are executed do not overlap with the periods during which the sub-command components of the first type are executed; and
transmitting the sub-command components of the first and second types,
and the receiving device being capable of:
receiving the sub-command components of the first and second types; and
executing the sub-command components of the first and second types without there being at least one overlap between execution of the sub-command components of the first and second types.

According to a third aspect of the invention there is provided a server for modifying a command sequence comprising a plurality of commands, the commands having a schedule by which they are to be executed, the server being capable of:
transforming the commands into sub-command components of a first type which have to be executed according to the schedule and sub-command components of a second type which are not constrained to be executed according to the schedule; and
adjusting the order of the sub-command components so that estimated periods during which the sub-command components of the second type are executed do not overlap with the periods during which the sub-command components of the first type are executed.

Preferably, the server is a rich media server;

According to a fourth aspect of the invention there is provided a terminal device capable of:
receiving a modified command sequence comprising a plurality of sub-command components, the sub-command components being representative of original commands having a schedule by which they are to be executed which have been transformed into sub-command components of a first type which have to be executed according to the schedule and sub-command components of a second type which are not constrained to be executed according to the schedule, the order of the sub-command components having been adjusted so that estimated periods during which the sub-command components of the second type are executed do not overlap with the periods during which the sub-command components of the first type are executed; and
executing the sub-command components of the first and second types without there being at least one overlap between execution of the sub-command components of the first and second types.

Preferably, the terminal device comprises a rich media client.

According to a fifth aspect of the invention there is provided a computer program product comprising software code that when executed on a computing system performs a method of modifying a command sequence comprising a plurality of commands, the commands having a schedule by which they are to be executed, comprising the steps of:
transforming the commands into sub-command components of a first type which have to be executed according to the schedule and sub-command components of a second type which are not constrained to be executed according to the schedule; and
adjusting the order of the sub-command components so that estimated periods during which the sub-command components of the second type are executed do not overlap with the periods during which the sub-command components of the first type are executed.

Preferably, the computer program product is stored on a computer-readable medium.

According to a sixth aspect of the invention there is provided a command sequence comprising a plurality of sub-command components, the sub-command components being representative of original commands having a schedule by which they are to be executed which have been transformed into sub-command components of a first type which have to be executed according to the schedule and sub-command components of a second type which are not constrained to be executed according to the schedule, the order of the sub-command components having been adjusted so that estimated periods during which the sub-command components of the second type are executed do not overlap with the periods during which the sub-command components of the first type are executed.

In one embodiment, the invention involves manipulating a set of commands to separate at least some of the background processing involved in preparing an item of content for presentation and the processing involved in presenting it, for example via the user interface of a receiving device. In this way, a minimum processing capability of the receiving device can be determined at which the time slots or gaps between periods of time during which the processing involved in presenting the item of content takes place are sufficiently long to allow the background processing to be carried out within them. This is because aspects associated with original commands in carrying out background processing can be moved in time relative to the processing involved in presenting the item of content.

According to a seventh aspect of the invention, there is provided a method of transforming an original command sequence into an optimised command sequence comprising the steps of:
selecting a candidate rate parameter;
estimating, for the candidate rate parameter, the size of individual command components;
attempting to distribute the individual command components within a command sequence space in such a way that parts of the command sequence space estimated to be occupied by the execution of individual load components of the optimised command sequence do not overlap; and
designating the candidate rate parameter as a successful rate parameter if the individual command components can be distributed within the command sequence space without overlap.

Preferably, the size is an estimation of time which would be taken in executing the command components. Alternatively, it is size in terms of memory space command components would occupy, for example in terms of bytes.

Preferably, the successful rate parameter may be a provisional rate parameter which is superseded by another successful rate parameter determined at a later point.

Preferably, distributing the individual command components means determining an order and/or schedule of the individual command components.

Preferably, the command sequence space is in the time domain. Alternatively, it may be in a domain of command length.

An embodiment of the invention will now be described, by way of example only, with reference to the accompanying drawings in which:
- Figure 1: shows client-server system; and
- Figure 2: shows a rich media server.

Figure 1 has been described in the foregoing.

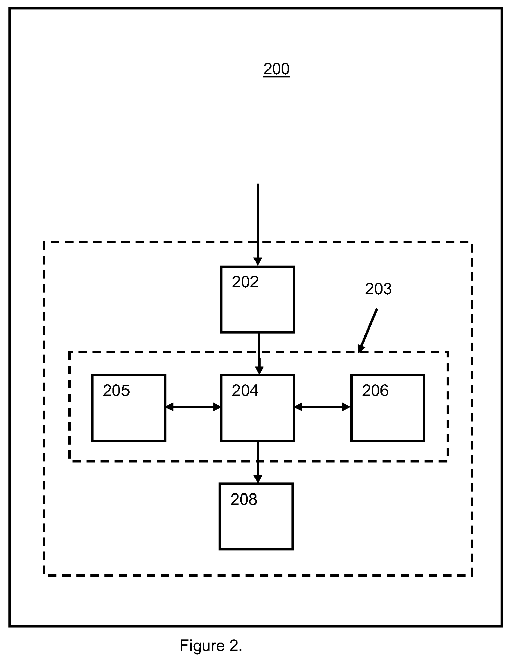

In an implementation of the invention, the rich media server 102 and the rich media client 104 are modified in order to carry out the invention as described in the following. Accordingly, Figure 2 shows a rich media server 200 comprising a transformation block 202 which receives original commands, an optimisation block 203 having an iterative optimiser sub-block 204, a cost assessment sub-block 205, and a sub-routine sub-block 206, and a store 208 for storing optimised sub-commands.

A method of optimising scheduling according to an embodiment of the invention will now be described.

In order to provide optimisation according to the present invention, an original scene descriptor command is separated (or transformed) by the transformation block 202 into subparts:
- A preparation sub-command which is to be executed before the scheduled time at which execution of the original command was to commence. This is a non time-critical sub-command in that its time of execution is moveable (within certain constraints as will be explained in the following).
- An in-time sub-command which is to be executed at the scheduled time at which execution of the original command was to commence. This is a time-critical sub-command in that the time at which its execution is to commence is fixed, that is constrained to be at a certain scheduled time, for example because it creates a visual or auditory effect which can be observed by a user of a device, and the delay of such an effect may be noticed.

In general, respective preparation sub-commands associated with two original commands have to be executed in the same order as the two original commands because in some cases the execution of one preparation sub-command needs the result of the execution of an earlier preparation sub-command. Preparation sub-commands generally require more time to execute than in-time sub-commands.

Examples of original commands and the sub-commands into which they can be transformed are given in the following table.

| **Original commands** | **Preparation sub-commands** | **In-time sub-commands** | **Comments** |
|---|---|---|---|
| Insert | Insert the same element within an SVG group (<g>) element. It shall have an automatically generated unique id and its visibility attribute shall be 'hidden'. | Replace the visibilit y attribute of the SVG group added during the preparati on to "visible' | |
| Replace (element) | Insert the replacement element (the child of the original command) within an SVG group element as a new child of the parent of the replaced node. The SVG group element should be hidden and have a generated id just as in the case of the Insert command. | 1) Delete the replaced element. | The preparation command requires reference to the parent of the replaced node. One way to get it is to add an SVG group element above each element with an id attribute in each scene command. Another way is to do the insertion with script in which the parent node is accessible by standard API function. |
| | | 2) Replace the visibilit y attribute of the SVG group added during the preparati on to "visible' | |
| NewScene | 1) Only for the first NewScene command: set an empty root element (SVG group) as NewScene. | 1) Delete the old scene group, if any. | New scenes can be considered as a Replace command for the whole scene. |
| | | 2) Replace the visibilit y attribute of the new scene SVG group to 'visible' | |
| | 2) Insert the new scene within a hidden SVG group element to the root SVG node. | | |
| All other scene commands (except RefreshScene) | - | The original command | Other scene commands are not transformed. They do not have child nodes (which may contain embedded graphics), so they are relatively small. They can also be executed relatively quickly. |

In general terms, during optimisation, sub-commands are examined in the cost assessment sub-block 205 in order to assess their cost in terms of resources of the device which will be needed to execute them. This command cost assessment, or cost estimate, uses a cost function based on various factors such as the size in bytes of a command, the type of command, etc. This is, in effect, a measure of the complexity of the commands. In one embodiment, the cost function is taken as the maximum value based on weighted values of the command size in bytes and the estimated execution time period calculated from the command type and the complexity of the child nodes (if any). The weights applied depend on the relative significance to the operation of the system of the issues of command size and processing capability. Taking into account the command cost, and constraints imposed by the scheduled times for commands to be executed, the rich media server 102 carries out a search for a speed characteristic to find its level (or more accurately a band) at (in) which a set of sub-commands given refined scheduled times, and potentially re-ordered, are likely to be successfully executable, that is all that of the set of sub-commands can be executed within the original schedule. The speed characteristic can be considered to represent CPU processor speed or the downloading bandwidth (or bit-rate) of the device which will be needed to execute the set of commands. In a broad sense, for each command, the command cost estimate is divided by a speed characteristic in order to provide a time period component which is used by the server to schedule the command.

This general explanation will be explained in terms of an embodiment in which a method of optimising the scheduling of scene descriptor commands works according to an iterative method (steps i to iv). This uses a schedule adjustment sub-routine to determine the order in which the sub-commands are to be executed. The schedule adjustment sub-routine is described after the iterative method has been described.

The iterative method operates according to the following iterative steps:
i. An initial arbitrary speed value is selected. This can be set by an estimation algorithm which operates, for example, by dividing the total cost of all the sub-command cost estimates by the total length of an optimised time period corresponding to the total duration of the media. In the case of live streaming, the optimisation may be performed for parts of the stream in which case the optimised time period is the length of any one particular part. The result provided by the estimation algorithm is then multiplied by an empirical constant (which has been generated based on previous statistics, for example by carrying out test runs of the optimisation method). For the purpose of explaining the invention, in this embodiment, the speed value is representative of the processing speed capability of the receiving device. The sub-commands are then scheduled according to the scheduling adjustment sub-routine described in the following for the selected speed value. Two alternative outcomes (A and B in the following) can result as a consequence of applying the scheduling adjustment sub-routine:
   ii(a). (Outcome A) If the scheduling adjustment sub-routine results in a schedule of sub-commands which are likely to be executed in a timely manner at the selected speed value (indicating a "successful" speed value), the speed value is halved and the sub-commands are then scheduled again according to the scheduling adjustment sub-routine and it is again checked if they are likely to be executed in a timely manner. After checking of each "successful" speed value the halving continues until the scheduling adjustment sub-routine indicates that timely execution is not achievable (indicating an "unsuccessful" speed value). At this point, the last "successful" speed value and the "unsuccessful" speed value are taken as representing upper and lower bounds of the speed value.
   ii(b). (Outcome B) If the scheduling adjustment sub-routine results in a schedule of sub-commands which are not likely to be executed in a timely manner at the selected speed value (an "unsuccessful" speed value), the speed value is doubled and the sub-commands are then scheduled again according to the scheduling adjustment sub-routine and it is again checked if they are likely to be executed in a timely manner. If the doubled speed value is also "unsuccessful", that is results in a schedule of sub-commands which are not likely to be executed in a timely manner at the selected speed value, it is doubled again and re-checked as many times as is necessary until the scheduling adjustment sub-routine indicates that timely execution is achievable (indicating a "successful" speed value). At this point, the last "unsuccessful" speed value and the "successful" speed value are taken as representing lower and upper bounds of the speed value.
iii. This step applies to either the lower and upper bounds result of step ii(a) or of step ii(b). The scheduling adjustment sub-routine is used to try scheduling commands with the average of the upper and lower bound speed values. If it succeeds, the average will be the new upper bound. If it does not succeed, it will be the new lower bound. This step is repeated iteratively until the difference of the two bounds is smaller than a predefined value (for example in one embodiment in absolute terms or in another embodiment as a percentage).
iv. These iterative steps have determined the last upper bound speed value which is considered to be the minimum speed value at which the sub-commands scheduled according to the scheduling adjustment sub-routine can be expected to run successfully. Accordingly, the scheduling which was determined for this last upper bound speed value is used to provide the final command timing (scheduling) of the scene descriptor sub-commands and they are sent with this schedule by the rich media server 102 to the terminal device incorporating the rich media client 104.

The schedule adjustment sub-routine will now be described. It comprises two main parts - scheduling in-time sub-commands and scheduling preparation sub-commands. As will be clear from the description of the iterative method, the schedule adjustment sub-routine is used a number of times in steps ii (a) / (b) and iii in order to determine the last upper bound speed value which is used to provide the final schedule of the scene descriptor sub-commands, that is it operates on a number of different speed values. The sub-commands are scheduled for a given speed value, either the initial arbitrary speed value selected or one of the subsequent speed values generated according to the iterative method in the foregoing.

### Scheduling In-time Sub-Commands

As a first step, the in-time sub-commands are scheduled in order, from the one which is to be executed first to the one which is to be executed last. It should be noted that since these in-time sub-commands have scheduled times at which the commencement of their execution starts (execution start times) which correspond to the execution start times of the original commands. Therefore, the time period required to execute a previous in-time sub-command must not be sufficiently long that its execution overlaps in time with the execution start time of a subsequent in-time sub-command. This represents a constraint to the scheduling of the in-time sub-commands. However, the preparation sub-commands are not so constrained and can be scheduled in any suitable manner to fit into the available time periods in which they can be executed so long as they are in an order which does not disrupt preparation of the scene for presentation. The in-time sub-commands can be considered to represent the framework of the set of sub-commands which together are executed in order to generate a scene. An example will now be described in which there are four commands which, as will be appreciated from the foregoing, are transformed into four preparation sub-commands and four in-time sub-commands.

The sizes of all of the in-time sub-commands are estimated to give respective sub-command cost estimates which are then divided by the given speed value to estimate the time periods required to handle each of the in-time sub-commands, referred to as execution periods, and these execution periods are stored. It is then determined if the execution period required to handle the first in-time sub-command, extending forwards in time from the execution start time of the first in-time sub-command, overlaps with the execution start time of the second in-time sub-command. If the execution period is short enough so there is no overlap (that is there is a so-called "positive time period"), the schedule adjustment sub-routine may continue. If the execution period is too long and there is overlap (that is there is a so-called "negative time period"), the schedule adjustment sub-routine is deemed to have failed, and the speed value is deemed to have been "unsuccessful". At this point, the iterative method at step ii(b) chooses a higher speed value and the schedule adjustment sub-routine re-starts.

Assuming the schedule adjustment sub-routine did not fail in scheduling the first in-time sub-command, it is then determined if the execution period required to handle the second in-time sub-command, extending forwards in time from the execution start time of the second in-time sub-command, overlaps with the execution start time of the third in-time sub-command. If the execution period is short enough so there is no overlap, the schedule adjustment sub-routine may continue. If the execution period is too long and there is overlap, the schedule adjustment sub-routine is deemed to have failed, and the speed value is deemed to have been "unsuccessful". At this point, the iterative method at step ii(b) chooses a higher speed value and the schedule adjustment sub-routine re-starts.

Assuming the schedule adjustment sub-routine did not fail in scheduling the second in-time sub-command, it is then determined if the execution period required to handle the third in-time sub-command, extending forwards in time from the execution start time of the third in-time sub-command, overlaps with the execution start time of the fourth in-time sub-command. If the execution period is short enough so there is no overlap, the schedule adjustment sub-routine may continue. If the execution period is too long and there is overlap, the schedule adjustment sub-routine is deemed to have failed, and the speed value is deemed to have been "unsuccessful". At this point, the iterative method at step ii(b) chooses a higher speed value and the schedule adjustment sub-routine re-starts.

To schedule the fourth in-time sub-command, if there is a defined time point by which it must have been executed, then it can be scheduled in a way similar to that used for the earlier in-time sub-commands. If there is no such defined time point, it is simply assumed that it will be scheduled according to the schedule of the original commands.

As a result of the scheduling adjustment sub-routine having successfully processed all of the in-time sub-commands, these sub-commands have assigned to them the original scheduled times, the execution periods required to handle each of them, and the speed value at which the in-time sub-commands can be successfully scheduled.

### Scheduling Preparation Sub-Commands

Having scheduled the in-time sub-commands, the schedule adjustment sub-routine now attempts to schedule the preparation sub-commands. At this point of the schedule adjustment sub-routine, there is a speed value (either the initial arbitrarily chosen one or one arrived at iteratively via the iterative method). The positive time periods between the estimated end of an in-time sub-command and a scheduled beginning of the next in-time sub-command are identified. Each of these positive time periods is referred to as a "gap" or "slot". Accordingly, in this example of there being four in-time sub-commands there are four gaps: a second, a third, and a fourth being between the first and second, and second and third, and third and fourth in-time sub-commands respectively; and a first gap located between an initial zero time and the first in-time sub-command.

It should be noted that the preparation sub-commands start off by having an original order which corresponds to the order of their corresponding in-time sub-commands (that is a sequence of a first preparation sub-command, a second preparation sub-command, a third preparation sub-command, and a fourth preparation sub-command). It is expected that in some cases there will be a dependency between nth and n+1th preparation sub-commands, for example if processing of an nth preparation sub-command leads to a processed result, say a graphical item, which is required for use by an n+1th preparation sub-command. In such a case, the schedule adjustment sub-routine is configured to maintain the order of the preparation sub-commands.

In a preferred embodiment of the invention, assigning preparation sub-commands to gaps is done firstly, in reverse order of preparation sub-commands from the one to be executed latest in time to the one to be executed earliest in time in terms of the original scheduled order, and secondly, in gap order going from the latest to the earliest in terms of actual chronological order. In this way, a preparation sub-command is as close to its corresponding in-time sub-command as possible (if there are several possible schedules) which provides better support for random access.

To do this, the sizes of all of the preparation sub-commands are estimated to give respective sub-command cost estimates which are then each divided by the given speed value to estimate the execution periods required to handle each of the preparation sub-commands, and these execution periods are stored. The execution period required to handle the last preparation sub-command is then compared with the size of the last (fourth) gap between the third and fourth in-time sub-commands. If the gap is large enough to accommodate the preparation sub-command, it is allocated to that gap. If it is not, the execution period required to handle the last preparation sub-command is compared with the size of the third gap. If the gap is large enough to accommodate the preparation sub-command, it is allocated to that gap. If it is not, the execution period required to handle the last preparation sub-command is compared with the size of the second gap. If the gap is large enough to accommodate the preparation sub-command, it is allocated to that gap. If it is not, the execution period required to handle the last preparation sub-command is compared with the size of the first gap. This is the time available before commencement of the first command. In other words, it is the execution period from the initial zero time (the start of a stream or the optimised period) to the execution start time of the first in-time command.

If the last preparation sub-command was capable of being allocated to one of the gaps, the schedule adjustment sub-routine is deemed to have succeeded in respect of that preparation sub-command and scheduling of the immediately preceding preparation sub-command starts. If the last preparation sub-command was too large to be accommodated in any of the gaps, the schedule adjustment sub-routine is deemed to have failed, and the speed value is deemed to have been "unsuccessful". At this point, the iterative method at step ii(b) chooses a higher speed value and the schedule adjustment sub-routine re-starts from the beginning by attempting to schedule the first of the in-time sub-commands.

Assuming that the scheduling of the last preparation sub-command has been successful, the execution period required to handle the third preparation sub-command is compared with the size of the third gap or if the last preparation sub-command was allocated to an earlier gap, to that earlier gap. In either case, if allocation of the third preparation sub-command is being attempted into a gap already occupied by the last preparation sub-command, the execution period required to handle the third preparation sub-command is compared with the size of the available space in the gap, that is the size of the gap minus the execution time of the last preparation sub-command. If the last preparation sub-command was, in fact, allocated to the fourth gap, the execution period of the third preparation sub-command is simply compared with the size of the third gap. If the available space of the gap (whether this is the third gap unoccupied by the last preparation sub-command, the third gap occupied by the last preparation sub-command, or an earlier gap occupied by the last preparation sub-command) is large enough to accommodate the third preparation sub-command, it is allocated to that gap. If it is not, the execution period required to handle the third preparation sub-command is compared, in turn, with the size(s) of any preceding gap(s) until one is found which is large enough to accommodate the third preparation sub-command. If such a gap is found, the third preparation sub-command is allocated to that gap and the schedule adjustment sub-routine is deemed to have succeeded in respect of the third preparation sub-command and scheduling of the immediately preceding preparation sub-command starts. If the third preparation sub-command was too large to be accommodated in any of the gaps, the schedule adjustment sub-routine is deemed to have failed, and the speed value is deemed to have been "unsuccessful". At this point, the iterative method at step ii(b) chooses a higher speed value and the schedule adjustment sub-routine re-starts from the beginning by attempting to schedule the first of the in-time sub-commands.

Assuming that the scheduling of the third preparation sub-command has been successful, the execution period required to handle the second preparation sub-command is compared with the size of the second gap or to the first gap if the third preparation sub-command was allocated to that gap. In either case, if allocation of the second preparation sub-command is being attempted into a gap already occupied by the third preparation sub-command, the execution period required to handle the second preparation sub-command is compared with the size of the available space in the gap, that is the size of the gap minus the execution time of the third preparation sub-command. It may be the case that the third and the last preparation sub-commands are allocated to the same gap in which case, the available space in the gap is the size of the gap minus the execution time of the third preparation sub-command and minus the execution time of the last preparation sub-command. If the third preparation sub-command was, in fact, allocated to the third gap, the execution period of the second preparation sub-command is simply compared with the size of the second gap. If the available space of the gap into which the third preparation sub-command is being scheduled (whether this is the second gap unoccupied by the third preparation sub-command, the second gap occupied by the third preparation sub-command but not by the last preparation sub-command, the second gap occupied by the third and last preparation sub-commands, the first gap occupied by the third preparation sub-command but not by the last preparation sub-command, or the first gap occupied by the third and last preparation sub-commands) is large enough to accommodate the second preparation sub-command, it is allocated to that gap. If it is not and/or if the first gap is unoccupied by any other preparation sub-command, the execution period required to handle the second preparation sub-command is compared with the size of the first gap unoccupied by the third preparation sub-command. If the available space of the first gap is large enough to accommodate the second preparation sub-command, it is allocated to that gap. If the second preparation sub-command was too large to be accommodated in any of the gaps, the schedule adjustment sub-routine is deemed to have failed, and the speed value is deemed to have been "unsuccessful". At this point, the iterative method at step ii(b) chooses a higher speed value and the schedule adjustment sub-routine re-starts from the beginning by attempting to schedule the in-time sub-commands.

Assuming that the scheduling of the second preparation sub-command has been successful, the execution period required to handle the first preparation sub-command is compared with the size of the first gap. It may be the case that the second and a subsequent one or subsequent ones of the preparation sub-commands are allocated to the first gap in which case, the execution period required to handle the first preparation sub-command is compared with the size of the available space in the gap, that is the size of the first gap minus the execution time(s) of the second and any other preparation sub-command(s). If there is enough space in the first gap to accommodate the first preparation sub-command, it is allocated to that gap and the schedule adjustment sub-routine has successfully allocated all of the sub-commands, and the iterative method resumes.

If there is not enough space in the first gap to accommodate the first preparation sub-command, the schedule adjustment sub-routine is deemed to have failed, and the speed value is deemed to have been "unsuccessful". At this point, the iterative method at step ii(b) chooses a higher speed value and the schedule adjustment sub-routine re-starts from the beginning by attempting to schedule the in-time sub-commands.

For each successfully allocated preparation sub-command, a corresponding scheduled execution start time is calculated based on the scheduled execution start time of the preceding in-time sub-command and the execution period of that in-time sub-command and this execution start time is stored. In the cases in which multiple preparation sub-commands are allocated to the same gap, calculation of the execution start times has also to take into account any preceding preparation sub-commands in that gap. An exception to the calculation of execution start times is in respect of the first preparation sub-command which is given an execution start time of zero.

As a result of the scheduling adjustment sub-routine having successfully processed all of the preparation sub-commands, these sub-commands have assigned to them new scheduled execution start times, the execution periods required to handle each of them, and the speed value at which the in-time sub-commands can be successfully scheduled.

It should be noted that the time period from the estimated end of one in-time sub-command to the execution start time of a subsequent one can also be zero or effectively zero meaning that it is too small a time period to execute any preparation sub-commands which might need to be executed. In order to avoid carrying out unnecessary processing, no attempt is made to schedule the preparation sub-commands into the gaps having a size below a minimum threshold.

Accordingly, it will be understood that the preparation sub-commands are allocated according to the following principles:
(i) a preparation sub-command precedes its corresponding in-time sub-command;
(ii) a preparation sub-command does not need to immediately precede its corresponding in-time sub-command
(iii) more than one preparation sub-command can occupy the same gap; and
(iv) not all gaps need to be occupied.
In addition, in respect of this embodiment, there is an additional principle (v) that the order of the preparation sub-commands is maintained.

Once optimisation of the sub-commands has been carried out, redundant random access points (for example RefreshScene commands) are re-calculated/updated.

Although it is stated that, as a first step in its scheduling, the execution period required to handle an nth preparation sub-command is automatically compared with the size of the nth gap (or an earlier gap if a later preparation sub-command has been allocated to it), this applies in the case in which there is dependency between preparation sub-commands. In a case in which there is no dependency between preparation sub-commands, preparation sub-commands can be optimised so that this results in them having an optimised order which is different to their starting order of the preparation sub-commands (or the order of their corresponding in-time sub-commands). In this case, allocation of the preparation sub-commands to gaps is still done in reverse order of preparation sub-commands from the one to be executed latest in time to the one to be executed earliest in time in terms of their starting order. However, they can be freely allocated within the gaps in order for them all to be accommodated at the lowest speed value so long as all preparation sub-commands are allocated to gaps which precede their respect in-time sub-commands.

In the foregoing, the comparisons between the preparation sub-commands and the gaps are done in the time domain, that is by comparing the time period required to handle a preparation sub-command with the size of the gap in terms of its duration in time, or time period. However, it is possible to carry out such a comparison in other domains, for example in a domain for which a cost is estimated in terms of the size of the preparation sub-commands and the gaps in terms of bytes. This may be done for the purposes of convenience of processing. If such an alternative approach is adopted, then the preparation sub-commands and gaps are converted into the appropriate domain according to any of the methods referred to herein or which are generally known. During the carrying out of the optimisation method, various calculations and comparisons may be done in different domains. It is not necessary for the same domain to be used throughout the method.

Rather than calculating the execution periods required to handle all of the sub-commands at the start of scheduling for that type of sub-command, such calculations may be done separately to provide the execution periods required to handle a particular preparation sub-command directly before its scheduling is handled.

Following application of the optimising method, the commands are then sent from the rich media server 102 to rich media client 104, for example running on a terminal device at which the commands are executed in order to render content via a user interface of the terminal device. (It should be understood that the term render applies both to visual and audible presentation.) The optimisation of the schedule means that the commands have an improved chance of being processed on the receiving device so that executed commands result in a scene being visually and/or audibly output by a constrained resource device. The rich media client 104 is modified so that it is capable of recognising and handling the in-time and preparation sub-commands. However, in another embodiment of the invention, if the optimisation is performed on the server, and a known rich media client 104 is dealing with sub-commands which it already is capable of handling, it does not need to be modified.

Although embodiments of the invention have been described in which commands are transformed into sub-commands of a first type which have to be executed according to an original command schedule, this does not necessarily mean that execution of a sub-command of the first type must start at the same time as its corresponding original command. For example, if a replace command is transformed into a two-state animation command in which at a certain point in time a first graphic changes to a second graphic, the correspondence with the original schedule relates to the change from the first graphic to the second graphic and not to the start point of execution of the animation command. Furthermore, this highlights another feature of the invention - the sub-command of the second type corresponds to the insertion of the animation command and the sub-command of the first type corresponds to its activation. In this sense the sub-commands are not separate and distinct commands but one is in fact an operation being carried out on the other.

The method is described as being applicable to the scheduling of scene descriptor commands in a rich media server although it may apply to any situation in which a series of commands needs to be executed within the framework of a time schedule.

In the embodiments described above, the scene commands as those defined by the MPEG-LASeR specification. However, the invention is not limited to scene commands of that particular type.

Although reference is made to the server carrying out various method steps, the invention is not limited to such a feature and some or all of the method steps can be carried out other than in the server. It may be the case that method steps are carried out elsewhere and the server is simply provided with the commands having an optimised schedule so that it can send them out to the receiving device. For example the optimisation can be implemented at any step of the rich media content processing, including:
- embedded within an authoring tool, that generates input for the rich media server; and
- as a standalone optimization tool to process rich media content.

In another embodiment, the optimization is carried out by a capability embedded in the rich media client. In this case the optimisation is only for processing time periods, and not for eliminating traffic bursts. However this can be dealt with by using known techniques, such as buffering.

The current invention is capable of transforming a scene description into a modified scene description in such a way, that:
- the observable (visible and/or audible) effects of the content with the resulting scene description is the same as with the original scene description (which can be viewed as "lossless optimisation"), or the difference between the observable effects of the resulting scene description and the original scene descriptions is smaller than a specified limit (which can be considered to be "lossy optimisation"); and
- the traffic generated by streaming and/or the processing capacity required to execute the resulting scene description is better distributed in time.

In the case of "lossy optimisation", in-time sub-commands may be scheduled to be played according to a schedule which is slightly different to the schedule of the original commands but not deviating so much that this would inconvenience a user. Making such a slight schedule change might enable the sub-commands to be optimised for a lower speed value than would otherwise be the case.

In a refinement of the invention, in a case in which multiple preparation sub-commands occupy the same gap, the proportions of the gap assigned to respective preparation sub-commands is determined by their relative cost estimates. Preparation sub-commands with large cost estimates are given a larger part of the gap. This is, of course, subject to each preparation sub-command being provided with a period of time in the gap at least equal to its execution period.

The sub-commands included in the foregoing are provided only for the purpose of illustrating the invention. Other commands are sub-commands may be used, for example a delete command which is transformed into a hide in-time sub-command and a delete post-processing sub-command.

While preferred embodiments of the invention have been shown and described, it will be understood that such embodiments are described by way of example only. Numerous variations, changes and substitutions will occur to those skilled in the art without departing from the scope of the present invention.

## Claims

1. A method of modifying a command sequence comprising a plurality of scene descriptor commands of rich media, the rich media comprising rich media content and the scene descriptor commands which define the way in which the rich media content is to be built up, presented, and changed, the scene descriptor commands having a schedule by which they are to be executed, the method comprising the steps of:
transforming the scene descriptor commands into sub-command components of a first type which have to be executed according to the schedule and sub-command components of a second type which are not constrained to be executed according to the schedule; and
adjusting the order of the sub-command components so that estimated periods during which the sub-command components of the second type are executed do not overlap with the periods during which the sub-command components of the first type are executed,
wherein the adjusting involves selecting a rate parameter and attempting to schedule the sub-command components according to a scheduling adjustment sub-routine for the selected rate parameter,
wherein the scheduling adjustment sub-routine is applied iteratively, in which scheduling sub-command components takes place with various values of the rate parameter in order to determine a rate parameter having as low a value as possible at which it is estimated that the sub-command components can be processed correctly,
wherein the rate parameter is a speed value representative of a processing speed of a receiving device receiving the sub-command components of the first and second types, or a speed value representative of a transmission rate between a server (200) transmitting the sub-command components of the first and second types and a receiving device receiving the sub-command components of the first and second types.

2. A method according to claim 1 in which sub-command components of the second type are scheduled to be executed in advance of the schedule by which its corresponding sub-command component of the first type is to be executed.

3. A method according to claim 1 or claim 2 in which a sub-command component of the second type is scheduled to be executed in advance of the schedule by which another sub-command component of the first type is to be executed which precedes the corresponding sub-command component of the first type so that there is at least one intervening sub-command component scheduled for execution between the sub-command component of the second type and its corresponding sub-command component of the first type.

4. A method according to any preceding claim in which the sub-command components of the first type have a time-critical aspect in which execution according to the schedule relates to an event occurring which is perceptible to a user of a terminal device or has a material effect to an observer.

5. A method according to any preceding claim in which respective costs of executing the sub-command components are estimated and it is determined whether there are gaps available within an overall resource occupied by sub-command components of the first type which are sufficiently large to enable the sub-command components of the second type to be executed within them.

6. A method according to claim 5 in which a sub-command component of the second type is allocated to the same gap as one or more other sub-command components of the second type if there is room to accommodate them both or all.

7. A method according to any preceding claim in which the respective costs of executing the sub-command components are used to generate time periods based on the various values of the rate parameter.

8. A method according to any preceding claim in which sub-command components of the first type are scheduled and then sub-command components of the second type are scheduled.

9. A method according to any preceding claim in which the sub-command components of the second type are scheduled in reverse order, from the one which is to be executed last to the one which is to be executed first.

10. A method according to any preceding claim which involves generating an additional schedule by which the sub-command components of the second type are to be executed.

11. A system for modifying and transmitting a command sequence comprising a plurality of scene descriptor commands of rich media, the rich media comprising rich media content and the scene descriptor commands which define the way in which the rich media content is to be built up, presented, and changed, the scene descriptor commands having a schedule by which they are to be executed, the system comprising a server (200) and a receiving device, the server being capable of:
transforming the scene descriptor commands into sub-command components of a first type which have to be executed according to the schedule and sub-command components of a second type which are not constrained to be executed according to the schedule;
adjusting the order of the sub-command components so that estimated periods during which the sub-command components of the second type are executed do not overlap with the periods during which the sub-command components of the first type are executed,
wherein the adjusting involves selecting a rate parameter and attempting to schedule the sub-command components according to a scheduling adjustment sub-routine for the selected rate parameter,
wherein the scheduling adjustment sub-routine is applied iteratively, in which scheduling sub-command components takes place with various values of the rate parameter in order to determine a rate parameter having as low a value as possible at which it is estimated that the sub-command components can be processed correctly,
wherein the rate parameter is a speed value representative of a processing speed of the receiving device, or a speed value representative of a transmission rate between the server (200) and the receiving device; and
transmitting the sub-command components of the first and second types, and the receiving device being capable of:
receiving the sub-command components of the first and second types; and
executing the sub-command components of the first and second types without there being at least one overlap between execution of the sub-command components of the first and second types.

12. A server (200) for modifying a command sequence comprising a plurality of scene descriptor commands of rich media, the rich media comprising rich media content and the scene descriptor commands which define the way in which the rich media content is to be built up, presented, and changed, the scene descriptor commands having a schedule by which they are to be executed, the server being capable of:
transforming the scene descriptor commands into sub-command components of a first type which have to be executed according to the schedule and sub-command components of a second type which are not constrained to be executed according to the schedule; and
adjusting the order of the sub-command components so that estimated periods during which the sub-command components of the second type are executed do not overlap with the periods during which the sub-command components of the first type are executed,
wherein the adjusting involves selecting a rate parameter and attempting to schedule the sub-command components according to a scheduling adjustment sub-routine for the selected rate parameter,
wherein the scheduling adjustment sub-routine is applied iteratively, in which scheduling sub-command components takes place with various values of the rate parameter in order to determine a rate parameter having as low a value as possible at which it is estimated that the sub-command components can be processed correctly,
wherein the rate parameter is a speed value representative of a processing speed of a receiving device receiving the sub-command components of the first and second types, or a speed value representative of a transmission rate between the server (200) transmitting the sub-command components of the first and second types and a receiving device receiving the sub-command components of the first and second types.

13. A terminal device capable of:
receiving a modified command sequence comprising a plurality of sub-command components, the sub-command components being representative of original scene descriptor commands of rich media, the rich media comprising rich media content and the scene descriptor commands which define the way in which the rich media content is to be built up, presented, and changed, the scene descriptor having a schedule by which they are to be executed which have been transformed into sub-command components of a first type which have to be executed according to the schedule and sub-command components of a second type which are not constrained to be executed according to the schedule, the order of the sub-command components having been adjusted so that estimated periods during which the sub-command components of the second type are executed do not overlap with the periods during which the sub-command components of the first type are executed, wherein the adjusting involves selecting a rate parameter and attempting to schedule the sub-command components according to a scheduling adjustment sub-routine for the selected rate parameter, wherein the scheduling adjustment sub-routine is applied iteratively, in which scheduling sub-command components takes place with various values of the rate parameter in order to determine a rate parameter having as low a value as possible at which it is estimated that the sub-command components can be processed correctly, wherein the rate parameter is a speed value representative of a processing speed of the terminal device, or a speed value representative of a transmission rate between a server (200) transmitting the sub-command components of the first and second types and the terminal device; and
executing the sub-command components of the first and second types without an overlap between execution of the sub-command components of the first and second types.

14. A computer program product comprising software code that when executed on a computing system performs a method of modifying a command sequence according to claim 1..

15. A computer program product according to claim 14, in which the computer program product is stored on a computer-readable medium.

16. A content stream comprising a plurality of sub-command components, the sub-command components being representative of original scene descriptor commands of rich media, the rich media comprising rich media content and the scene descriptor commands which define the way in which the rich media content is to be built up, presented, and changed, the scene descriptor having a schedule by which they are to be executed which have been transformed into sub-command components of a first type which have to be executed according to the schedule and sub-command components of a second type which are not constrained to be executed according to the schedule, the order of the sub-command components having been adjusted so that estimated periods during which the sub-command components of the second type are executed do not overlap with the periods during which the sub-command components of the first type are executed, wherein the adjusting involves selecting a rate parameter and attempting to schedule the sub-command components according to a scheduling adjustment sub-routine for the selected rate parameter, wherein the scheduling adjustment sub-routine is applied iteratively, in which scheduling sub-command components takes place with various values of the rate parameter in order to determine a rate parameter having as low a value as possible at which it is estimated that the sub-command components can be processed correctly, wherein the rate parameter is a speed value representative of a processing speed of a receiving device receiving the sub-command components of the first and second types, or a speed value representative of a transmission rate between a server (200) the sub-command components of the first and second types and a receiving device receiving the sub-command components of the first and second types.

## Patentansprüche

1. Verfahren zum Modifizieren einer Befehlsfolge, die eine Mehrzahl von Szenendeskriptorbefehlen von Rich Media umfasst, wobei Rich Media Rich-Media-Inhalt und die Szenendeskriptorbefehle umfasst, welche die Art und Weise definieren, in welcher der Rich-Media-Inhalt aufgebaut, dargestellt und geändert werden soll, die Szenendeskriptorbefehle einen Zeitplan aufweisen, durch welchen sie ausgeführt werden sollen, und das Verfahren die folgenden Schritte umfasst:
Umwandeln der Szenendeskriptorbefehle in Unterbefehlskomponenten eines ersten Typs, die gemäß dem Zeitplan ausgeführt werden sollen, und Unterbefehlskomponenten eines zweiten Typs, die nicht auf eine Ausführung gemäß dem Zeitplan beschränkt sind; und
derartiges Anpassen der Reihenfolge der Unterbefehlskomponenten, dass geschätzte Perioden, während derer die Unterbefehlskomponenten des zweiten Typs ausgeführt werden, sich nicht mit Perioden überlappen, während derer die Unterbefehlskomponenten des ersten Typs ausgeführt werden,
wobei das Anpassen ein Auswählen eines Ratenparameters und Versuchen des Disponierens der Unterbefehlskomponenten gemäß einer Zeitplananpassungs-Subroutine für den ausgewählten Ratenparameter umfasst,
wobei die Zeitplananpassungs-Subroutine iterativ angewendet wird, wobei das Disponieren von Unterbefehlskomponenten mit verschiedenen Werten des Ratenparameters stattfindet, um einen Ratenparameter zu bestimmen, der einen so niedrigen Wert als möglich aufweist, bei dem geschätzt wird, dass die Unterbefehlskomponenten korrekt verarbeitet werden können,
wobei der Ratenparameter ein Geschwindigkeitswert, der für eine Verarbeitungsgeschwindigkeit einer Empfangsvorrichtung repräsentativ ist, welche die Unterbefehlskomponenten der ersten und zweiten Typen empfängt, oder ein Geschwindigkeitswert ist, der für eine Übertragungsrate zwischen einem Server (200), der die Unterbefehlskomponenten der ersten und zweiten Typen sendet, und einer Empfangsvorrichtung repräsentativ ist, welche die Unterbefehlskomponenten der ersten und zweiten Typen empfängt.

2. Verfahren nach Anspruch 1, wobei die Unterbefehlskomponenten des zweiten Typs so disponiert werden, dass sie vor dem Zeitplan ausgeführt werden, durch welchen ihre entsprechende Unterbefehlskomponente des ersten Typs ausgeführt werden soll.

3. Verfahren nach Anspruch 1 oder 2, wobei eine Unterbefehlskomponente des zweiten Typs disponiert wird, dass sie vor dem Zeitplan ausgeführt werden soll, durch welchen eine andere Unterbefehlskomponente des ersten Typs ausgeführt werden soll, die der entsprechenden Unterbefehlskomponente des ersten Typs vorangeht, so dass es mindestens eine Zwischen-Unterbefehlskomponente gibt, die zur Ausführung zwischen der Unterbefehlskomponente des zweiten Typs und ihrer entsprechenden Unterbefehlskomponente des ersten Typs disponiert wird.

4. Verfahren nach einem der vorhergehenden Ansprüche, wobei die Unterbefehlskomponenten des ersten Typs einen zeitkritischen Aspekt aufweisen, wobei die Ausführung gemäß dem Zeitplan mit einem eintretenden Ereignis in Beziehung steht, das für einen Benutzer eines Endgeräts wahrnehmbar ist oder eine wesentliche Auswirkung auf einen Beobachter hat.

5. Verfahren nach einem der vorhergehenden Ansprüche, wobei jeweilige Kosten des Ausführens der Unterbefehlskomponenten geschätzt werden und bestimmt wird, ob es Lücken, die innerhalb einer Gesamtressource verfügbar sind, die von Unterbefehlskomponenten des ersten Typs belegt wird, gibt, die groß genug sind, damit die Unterbefehlskomponenten des zweiten Typs zu innerhalb derselben ausgeführt werden können.

6. Verfahren nach Anspruch 5, wobei eine Unterbefehlskomponente des zweiten Typs der gleichen Lücke wie eine oder mehrere andere Unterbefehlskomponenten des zweiten Typs zugeordnet wird, wenn Platz vorhanden ist, um sie beide oder alle unterzubringen.

7. Verfahren nach einem der vorhergehenden Ansprüche, wobei die jeweiligen Kosten des Ausführens der Unterbefehlskomponenten verwendet werden, um Zeitperioden basierend auf den verschiedenen Werten des Ratenparameters zu erzeugen.

8. Verfahren nach einem der vorhergehenden Ansprüche, wobei die Unterbefehlskomponenten des ersten Typs disponiert werden, und dann die Unterbefehlskomponenten des zweiten Typs disponiert werden.

9. Verfahren nach einem der vorhergehenden Ansprüche, wobei die Unterbefehlskomponenten des zweiten Typs in umgekehrter Reihenfolge, von der einen, die als Letzte ausgeführt werden soll, zu der einen, die als Erste ausgeführt werden soll, disponiert werden.

10. Verfahren nach einem der vorhergehenden Ansprüche, das ein Erzeugen eines zusätzlichen Zeitplans umfasst, durch welchen die Unterbefehlskomponenten des zweiten Typs ausgeführt werden sollen.

11. System zum Modifizieren und Senden einer Befehlsfolge, die eine Mehrzahl von Szenendeskriptorbefehlen von Rich Media umfasst, wobei Rich Media Rich-Media-Inhalt und die Szenendeskriptorbefehle umfasst, welche die Art und Weise definieren, in welcher der Rich-Media-Inhalt aufgebaut, dargestellt und geändert werden soll, die Szenendeskriptorbefehle einen Zeitplan aufweisen, durch welchen sie ausgeführt werden sollen, das System einen Server (200) und eine Empfangsvorrichtung umfasst, und der Server in der Lage ist zum:
Umwandeln der Szenendeskriptorbefehle in Unterbefehlskomponenten eines ersten Typs, die gemäß dem Zeitplan ausgeführt werden sollen, und Unterbefehlskomponenten eines zweiten Typs, die nicht auf eine Ausführung gemäß dem Zeitplan beschränkt sind;
derartigen Anpassen der Reihenfolge der Unterbefehlskomponenten, dass geschätzte Perioden, während derer die Unterbefehlskomponenten des zweiten Typs ausgeführt werden, sich nicht mit Perioden überlappen, während derer die Unterbefehlskomponenten des ersten Typs ausgeführt werden,
wobei das Anpassen ein Auswählen eines Ratenparameters und Versuchen des Disponierens der Unterbefehlskomponenten gemäß einer Zeitplananpassungs-Subroutine für den ausgewählten Ratenparameter umfasst,
wobei die Zeitplananpassungs-Subroutine iterativ angewendet wird, wobei das Disponieren von Unterbefehlskomponenten mit verschiedenen Werten des Ratenparameters stattfindet, um einen Ratenparameter zu bestimmen, der einen so niedrigen Wert als möglich aufweist, bei dem geschätzt wird, dass die Unterbefehlskomponenten korrekt verarbeitet werden können,
wobei der Ratenparameter ein Geschwindigkeitswert, der für eine Verarbeitungsgeschwindigkeit der Empfangsvorrichtung repräsentativ ist, oder ein Geschwindigkeitswert ist, der für eine Übertragungsrate zwischen einem Server (200) und der Empfangsvorrichtung repräsentativ ist; und
Senden der Unterbefehlskomponenten der ersten und zweiten Typen,
und die Empfangsvorrichtung in der Lage ist zum:
Empfangen der Unterbefehlskomponenten der ersten und zweiten Typen; und
Ausführen der Unterbefehlskomponenten der ersten und zweiten Typen ohne die geringste Überlappung zwischen der Ausführung der Unterbefehlskomponenten der ersten und zweiten Typen.

12. Server (200) zum Modifizieren einer Befehlsfolge, die eine Mehrzahl von Szenendeskriptorbefehlen von Rich Media umfasst, wobei Rich Media Rich-Media-Inhalt und die Szenendeskriptorbefehle umfasst, welche die Art und Weise definieren, in welcher der Rich-Media-Inhalt aufgebaut, dargestellt und geändert werden soll, die Szenendeskriptorbefehle einen Zeitplan aufweisen, durch welchen sie ausgeführt werden sollen, und der Sever in der Lage ist zum:
Umwandeln der Szenendeskriptorbefehle in Unterbefehlskomponenten eines ersten Typs, die gemäß dem Zeitplan ausgeführt werden sollen, und Unterbefehlskomponenten eines zweiten Typs, die nicht auf eine Ausführung gemäß dem Zeitplan beschränkt sind; und
derartigen Anpassen der Reihenfolge der Unterbefehlskomponenten, dass geschätzte Perioden, während derer die Unterbefehlskomponenten des zweiten Typs ausgeführt werden, sich nicht mit Perioden überlappen, während derer die Unterbefehlskomponenten des ersten Typs ausgeführt werden,
wobei das Anpassen ein Auswählen eines Ratenparameters und Versuchen des Disponierens der Unterbefehlskomponenten gemäß einer Zeitplananpassungs-Subroutine für den ausgewählten Ratenparameter umfasst,
wobei die Zeitplananpassungs-Subroutine iterativ angewendet wird, wobei das Disponieren von Unterbefehlskomponenten mit verschiedenen Werten des Ratenparameters stattfindet, um einen Ratenparameter zu bestimmen, der einen so niedrigen Wert als möglich aufweist, bei dem geschätzt wird, dass die Unterbefehlskomponenten korrekt verarbeitet werden können,
wobei der Ratenparameter ein Geschwindigkeitswert, der für eine Verarbeitungsgeschwindigkeit einer Empfangsvorrichtung repräsentativ ist, welche die Unterbefehlskomponenten der ersten und zweiten Typen empfängt, oder ein Geschwindigkeitswert ist, der für eine Übertragungsrate zwischen dem Server (200), der die Unterbefehlskomponenten der ersten und zweiten Typen sendet, und einer Empfangsvorrichtung repräsentativ ist, welche die Unterbefehlskomponenten der ersten und zweiten Typen empfängt.

13. Endgerätevorrichtung, die in der Lage ist zum:
Empfangen einer modifizierten Befehlsfolge, die eine Mehrzahl von Unterbefehlskomponenten umfasst, wobei die Unterbefehlskomponenten für ursprüngliche Szenendeskriptorbefehle von Rich Media repräsentativ sind, wobei Rich Media Rich-Media-Inhalt und die Szenendeskriptorbefehle umfasst, welche die Art und Weise definieren, in welcher der Rich-Media-Inhalt aufgebaut, dargestellt und geändert werden soll, wobei der Szenendeskriptor einen Zeitplan aufweist, durch welchen sie ausgeführt werden sollen, wobei sie in Unterbefehlskomponenten eines ersten Typs, die gemäß dem Zeitplan ausgeführt werden sollen, und Unterbefehlskomponenten eines zweiten Typs, die nicht auf eine Ausführung gemäß dem Zeitplan beschränkt sind, umgewandelt wurden, wobei die Reihenfolge der Unterbefehlskomponenten so angepasst wurde, dass geschätzte Perioden, während derer die Unterbefehlskomponenten des zweiten Typs ausgeführt werden, sich nicht mit Perioden überlappen, während derer die Unterbefehlskomponenten des ersten Typs ausgeführt werden, wobei das Anpassen ein Auswählen eines Ratenparameters und Versuchen des Disponierens der Unterbefehlskomponenten gemäß einer Zeitplananpassungs-Subroutine für den ausgewählten Ratenparameter umfasst, wobei die Zeitplananpassungs-Subroutine iterativ angewendet wird, wobei das Disponieren von Unterbefehlskomponenten mit verschiedenen Werten des Ratenparameters stattfindet, um einen Ratenparameter zu bestimmen, der einen so niedrigen Wert als möglich aufweist, bei dem geschätzt wird, dass die Unterbefehlskomponenten korrekt verarbeitet werden können, wobei der Ratenparameter ein Geschwindigkeitswert, der für eine Verarbeitungsgeschwindigkeit der Empfangsvorrichtung repräsentativ ist, oder ein Geschwindigkeitswert ist, der für eine Übertragungsrate zwischen einem Server (200), der die Unterbefehlskomponenten der ersten und zweiten Typen sendet, und der Endgerätevorrichtung repräsentativ ist; und
Ausführen der Unterbefehlskomponenten der ersten und zweiten Typen ohne Überlappung zwischen der Ausführung der Unterbefehlskomponenten der ersten und zweiten Typen.

14. Computerprogrammprodukt, umfassend Softwarecode, der bei Ausführung auf einem Computersystem ein Verfahren zum Modifizieren einer Befehlsfolge nach Anspruch 1 durchführt.

15. Computerprogrammprodukt nach Anspruch 14, wobei das Computerprogrammprodukt auf einem computerlesbaren Medium gespeichert ist.

16. Inhaltsstrom, umfassend eine Mehrzahl von Unterbefehlskomponenten, wobei die Unterbefehlskomponenten für ursprüngliche Szenendeskriptorbefehle von Rich Media repräsentativ sind, wobei Rich Media Rich-Media-Inhalt und die Szenendeskriptorbefehle umfasst, welche die Art und Weise definieren, in welcher der Rich-Media-Inhalt aufgebaut, dargestellt und geändert werden soll, der Szenendeskriptor einen Zeitplan aufweist, durch welchen sie ausgeführt werden sollen, wobei sie in Unterbefehlskomponenten eines ersten Typs, die gemäß dem Zeitplan ausgeführt werden sollen, und Unterbefehlskomponenten eines zweiten Typs, die nicht auf eine Ausführung gemäß dem Zeitplan beschränkt sind, umgewandelt wurden, wobei die Reihenfolge der Unterbefehlskomponenten so angepasst wurde, dass geschätzte Perioden, während derer die Unterbefehlskomponenten des zweiten Typs ausgeführt werden, sich nicht mit Perioden überlappen, während derer die Unterbefehlskomponenten des ersten Typs ausgeführt werden, wobei das Anpassen ein Auswählen eines Ratenparameters und Versuchen des Disponierens der Unterbefehlskomponenten gemäß einer Zeitplananpassungs-Subroutine für den ausgewählten Ratenparameter umfasst, wobei die Zeitplananpassungs-Subroutine iterativ angewendet wird, wobei das Disponieren von Unterbefehlskomponenten mit verschiedenen Werten des Ratenparameters stattfindet, um einen Ratenparameter zu bestimmen, der einen so niedrigen Wert als möglich aufweist, bei dem geschätzt wird, dass die Unterbefehlskomponenten korrekt verarbeitet werden können, wobei der Ratenparameter ein Geschwindigkeitswert, der für eine Verarbeitungsgeschwindigkeit einer Empfangsvorrichtung repräsentativ ist, welche die Unterbefehlskomponenten der ersten und zweiten Typen empfängt, oder ein Geschwindigkeitswert ist, der für eine Übertragungsrate zwischen einem Server (200), der die Unterbefehlskomponenten der ersten und zweiten Typen sendet, und einer Empfangsvorrichtung repräsentativ ist, welche die Unterbefehlskomponenten der ersten und zweiten Typen empfängt.

## Revendications

1. Un procédé de modification d'une séquence de commandes comprenant une pluralité de commandes de descripteur de scène de supports multimédias enrichis, les supports multimédias enrichis comprenant un contenu multimédia enrichi et les commandes de descripteur de scène qui définissent la manière dont le contenu multimédia enrichi doit être assemblé, présenté et modifié, les commandes de descripteur de scène possédant un échéancier selon lequel elles doivent être exécutées, le procédé comprenant les étapes suivantes :
la transformation des commandes de descripteur de scène en des composants de sous-commande d'un premier type qui doivent être exécutés conformément à l'échéancier et des composants de sous-commande d'un deuxième type qui ne doivent pas être exécutés conformément à l'échéancier, et
l'ajustement de l'ordre des composants de sous-commande de sorte que des périodes estimées au cours desquelles les composants de sous-commande du deuxième type sont exécutés ne chevauchent pas les périodes au cours desquelles les composants de sous-commande du premier type sont exécutés,
dans lequel l'ajustement implique la sélection d'un paramètre de vitesse et la tentative de planifier les composants de sous-commande en fonction d'un sous-programme d'ajustement de planification pour le paramètre de vitesse sélectionné,
dans lequel le sous-programme d'ajustement de planification est appliqué de manière itérative,
dans lequel la planification de composants de sous-commande se déroule avec diverses valeurs du paramètre de vitesse afin de déterminer un paramètre de vitesse possédant une valeur aussi faible que possible à laquelle il est estimé que les composants de sous-commande peuvent être traités correctement,
dans lequel le paramètre de vitesse est une valeur de vitesse représentative d'une vitesse de traitement d'un dispositif de réception recevant les composants de sous-commande des premier et deuxième types ou une valeur de vitesse représentative d'une vitesse de transmission entre un serveur (200) transmettant les composants de sous-commande des premier et deuxième types et un dispositif de réception recevant les composants de sous-commande des premier et deuxième types.

2. Un procédé selon la revendication 1 dans lequel des composants de sous-commande du deuxième type sont planifiés de façon à être exécutés en avance de l'échéancier selon lequel leur composant de sous-commande correspondant du premier type doit être exécuté.

3. Un procédé selon la revendication 1 ou 2 dans lequel un composant de sous-commande du deuxième type est planifié de façon à être exécuté en avance de l'échéancier selon lequel un autre composant de sous-commande du premier type doit être exécuté qui précède le composant de sous-commande correspondant du premier type de sorte qu'il existe au moins un composant de sous-commande intermédiaire planifié pour exécution entre le composant de sous-commande du deuxième type et son composant de sous-commande correspondant du premier type.

4. Un procédé selon l'une quelconque des revendications précédentes dans lequel les composants de sous-commande du premier type possèdent un aspect temporellement critique pour lequel une exécution conformément à l'échéancier porte sur la survenue d'un événement qui est perceptible à un utilisateur d'un dispositif terminal ou qui présente un effet matériel vis-à-vis d'un observateur.

5. Un procédé selon l'une quelconque des revendications précédentes dans lequel des coûts respectifs d'exécution des composants de sous-commande sont estimés et il est déterminé s'il existe des espaces disponibles à l'intérieur d'une ressource globale occupée par des composants de sous-commande du premier type qui sont suffisamment grands pour permettre aux composants de sous-commande du deuxième type d'être exécutés à l'intérieur de ceux-ci.

6. Un procédé selon la revendication 5 dans lequel un composant de sous-commande du deuxième type est attribué au même espace qu'un ou plusieurs autres composants de sous-commande du deuxième type s'il existe de la place pour les loger tous les deux ou tous.

7. Un procédé selon l'une quelconque des revendications précédentes dans lequel les coûts respectifs d'exécution des composants de sous-commande sont utilisés de façon à générer des périodes temporelles en fonction des diverses valeurs du paramètre de vitesse.

8. Un procédé selon l'une quelconque des revendications précédentes dans lequel des composants de sous-commande du premier type sont planifiés et ensuite des composants de sous-commande du deuxième type sont planifiés.

9. Un procédé selon l'une quelconque des revendications précédentes dans lequel les composants de sous-commande du deuxième type sont planifiés en ordre inverse, à partir de celui qui doit être exécuté en dernier lieu jusqu'à celui qui doit être exécuté en premier lieu.

10. Un procédé selon l'une quelconque des revendications précédentes qui implique la génération d'un échéancier additionnel selon lequel les composants de sous-commande du deuxième type doivent être exécutés.

11. Un système de modification et de transmission d'une séquence de commandes comprenant une pluralité de commandes de descripteur de scène de supports multimédias enrichis, les supports multimédias enrichis comprenant un contenu multimédia enrichi et les commandes de descripteur de scène qui définissent la manière dont le contenu multimédia enrichi doit être assemblé, présenté et modifié, les commandes de descripteur de scène possédant un échéancier selon lequel elles doivent être exécutées, le système comprenant un serveur (200) et un dispositif de réception, le serveur étant capable de :
transformer les commandes de descripteur de scène en des composants de sous-commande d'un premier type qui doivent être exécutés conformément à l'échéancier et des composants de sous-commande d'un deuxième type qui ne doivent pas être exécutés conformément à l'échéancier,
ajuster l'ordre des composants de sous-commande de sorte que des périodes estimées au cours desquelles les composants de sous-commande du deuxième type sont exécutés ne chevauchent pas les périodes au cours desquelles les composants de sous-commande du premier type sont exécutés,
dans lequel l'ajustement implique la sélection d'un paramètre de vitesse et la tentative de planifier les composants de sous-commande en fonction d'un sous-programme d'ajustement de planification pour le paramètre de vitesse sélectionné,
dans lequel le sous-programme d'ajustement de planification est appliqué de manière itérative,
dans lequel la planification de composants de sous-commande se déroule avec diverses valeurs du paramètre de vitesse afin de déterminer un paramètre de vitesse possédant une valeur aussi faible que possible à laquelle il est estimé que les composants de sous-commande peuvent être traités correctement,
dans lequel le paramètre de vitesse est une valeur de vitesse représentative d'une vitesse de traitement du dispositif de réception ou une valeur de vitesse représentative d'une vitesse de transmission entre le serveur (200) et le dispositif de réception, et
transmettre des composants de sous-commande des premier et deuxième types,
et le dispositif de réception étant capable de :
recevoir les composants de sous-commande des premier et deuxième types, et
exécuter les composants de sous-commande des premier et deuxième types sans qu'il existe au moins un chevauchement entre l'exécution des composants de sous-commande des premier et deuxième types.

12. Un serveur (200) destiné à la modification d'une séquence de commandes comprenant une pluralité de commandes de descripteur de scène de supports multimédias enrichis, les supports multimédias enrichis comprenant un contenu multimédia enrichi et les commandes de descripteur de scène qui définissent la manière dont le contenu multimédia enrichi doit être assemblé, présenté et modifié, les commandes de descripteur de scène possédant un échéancier selon lequel elles doivent être exécutées, le serveur étant capable de :
transformer les commandes de descripteur de scène en des composants de sous-commande d'un premier type qui doivent être exécutés conformément à l'échéancier et des composants de sous-commande d'un deuxième type qui ne doivent pas être exécutés conformément à l'échéancier, et
ajuster l'ordre des composants de sous-commande de sorte que des périodes estimées au cours desquelles les composants de sous-commande du deuxième type sont exécutés ne chevauchent pas les périodes au cours desquelles les composants de sous-commande du premier type sont exécutés,
dans lequel l'ajustement implique la sélection d'un paramètre de vitesse et la tentative de planifier les composants de sous-commande en fonction d'un sous-programme d'ajustement de planification pour le paramètre de vitesse sélectionné,
dans lequel le sous-programme d'ajustement de planification est appliqué de manière itérative,
dans lequel la planification de composants de sous-commande se déroule avec diverses valeurs du paramètre de vitesse afin de déterminer un paramètre de vitesse possédant une valeur aussi faible que possible à laquelle il est estimé que les composants de sous-commande peuvent être traités correctement,
dans lequel le paramètre de vitesse est une valeur de vitesse représentative d'une vitesse de traitement d'un dispositif de réception recevant les composants de sous-commande des premier et deuxième types ou une valeur de vitesse représentative d'une vitesse de transmission entre le serveur (200) transmettant les composants de sous-commande des premier et deuxième types et un dispositif de réception recevant les composants de sous-commande des premier et deuxième types.

13. Un dispositif terminal capable de :
recevoir une séquence de commandes modifiée comprenant une pluralité de composants de sous-commande, les composants de sous-commande étant représentatifs de commandes de descripteur de scène originales de supports multimédias enrichis, les supports multimédias enrichis comprenant un contenu multimédia enrichi et les commandes de descripteur de scène qui définissent la manière dont le contenu multimédia enrichi doit être assemblé, présenté et modifié, les commandes de descripteur de scène possédant un échéancier selon lequel elles doivent être exécutées et ayant été transformées en des composants de sous-commande d'un premier type qui doivent être exécutés conformément à l'échéancier et des composants de sous-commande d'un deuxième type qui ne doivent pas être exécutés conformément à l'échéancier, l'ordre des composants de sous-commande ayant été ajusté de sorte que des périodes estimées au cours desquelles les composants de sous-commande du deuxième type sont exécutés ne chevauchent pas les périodes au cours desquelles les composants de sous-commande du premier type sont exécutés, l'ajustement impliquant la sélection d'un paramètre de vitesse et la tentative de planifier les composants de sous-commande en fonction d'un sous-programme d'ajustement de planification pour le paramètre de vitesse sélectionné,
dans lequel le sous-programme d'ajustement de planification est appliqué de manière itérative,
dans lequel la planification de composants de sous-commande se déroule avec diverses valeurs du paramètre de vitesse afin de déterminer un paramètre de vitesse possédant une valeur aussi faible que possible à laquelle il est estimé que les composants de sous-commande peuvent être traités correctement, dans lequel le paramètre de vitesse est une valeur de vitesse représentative d'une vitesse de traitement du dispositif terminal ou une valeur de vitesse représentative d'une vitesse de transmission entre un serveur (200) transmettant les composants de sous-commande des premier et deuxième types et le dispositif terminal, et
exécuter les composants de sous-commande des premier et deuxième types sans un chevauchement entre une exécution des composants de sous-commande des premier et deuxième types.

14. Un produit de programme informatique contenant du code logiciel qui, lorsqu'il est exécuté sur un système informatique, exécute un procédé de modification d'une séquence de commandes selon la revendication 1.

15. Un produit de programme informatique selon la revendication 14, dans lequel le produit de programme informatique est conservé en mémoire sur un support lisible par ordinateur.

16. Un flux de contenus comprenant une pluralité de composants de sous-commande, les composants de sous-commande étant représentatifs de commandes de descripteur de scène originales de supports multimédias enrichis, les supports multimédias enrichis comprenant un contenu multimédia enrichi et les commandes de descripteur de scène qui définissent la manière dont le contenu multimédia enrichi doit être assemblé, présenté et modifié, les commandes de descripteur de scène possédant un échéancier selon lequel elles doivent être exécutées et ayant été transformées en des composants de sous-commande d'un premier type qui doivent être exécutés conformément à l'échéancier et des composants de sous-commande d'un deuxième type qui ne doivent pas être exécutés conformément à l'échéancier, l'ordre des composants de sous-commande ayant été ajusté de sorte que des périodes estimées au cours desquelles les composants de sous-commande du deuxième type sont exécutés ne chevauchent pas les périodes au cours desquelles les composants de sous-commande du premier type sont exécutés, l'ajustement impliquant la sélection d'un paramètre de vitesse et la tentative de planifier les composants de sous-commande en fonction d'un sous-programme d'ajustement de planification pour le paramètre de vitesse sélectionné,
dans lequel le sous-programme d'ajustement de planification est appliqué de manière itérative,
dans lequel la planification de composants de sous-commande se déroule avec diverses valeurs du paramètre de vitesse afin de déterminer un paramètre de vitesse possédant une valeur aussi faible que possible à laquelle il est estimé que les composants de sous-commande peuvent être traités correctement, dans lequel le paramètre de vitesse est une valeur de vitesse représentative d'une vitesse de traitement d'un dispositif de réception recevant les composants de sous-commande des premier et deuxième types ou une valeur de vitesse représentative d'une vitesse de transmission entre un serveur (200) transmettant les composants de sous-commande des premier et deuxième types et un dispositif de réception recevant les composants de sous-commande des premier et deuxième types.
